(19) Europäisches Patentamt
European Patent Office
Office européen des brevets

(11) Publication number: 0 409 537 A2

(12) EUROPEAN PATENT APPLICATION

(21) Application number: 90307762.6

(22) Date of filing: 17.07.90

(51) Int. Cl.5: C08K 3/00, C08L 81/02, B29D 15/00, //B29K81:00

(30) Priority: 18.07.89 JP 184945/89

(43) Date of publication of application: 23.01.91 Bulletin 91/04

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Nitoh, Toshikatsu
3-12-11, Imaizumi
Fuji-shi, Shizuoka(JP)
Inventor: Fukui, Kiichiro
1427-31, Atsuhara
Fuji-shi, Shizuoka(JP)
Inventor: Suzuki, Masayuki
7-5-4, Fujimidai
Fuji-shi, Shizuoka(JP)
Inventor: Tokushige, Kazutomo
885-1, Miyajima
Fuji-shi, Shizuoka(JP)

(74) Representative: Jackson, Peter et al
HYDE, HEIDE & O'DONNELL 10-12 Priests Bridgedge
London SW15 5JE(GB)

(54) **Molded gear.**

(57) A molded gear having improved properties for use in high temperature and heavy duty conditions is produced by molding a resin composition comprising:

(A) 100 parts by weight of a substantially straight chain polyarylene sulphide resin having a melt viscosity (at a temperature of 310°C and a shear rate of 1200/sec) of 1000 to 5000 P, and

(B) 5 to 400 parts by weight of an inorganic filler.

EP 0 409 537 A2

Xerox Copy Centre

# MOLDED GEAR

The present invention relates to a resin gear. In particular, the present invention relates to a resin gear which has high dedendum strength at high temperatures, high accuracy, light weight and high abrasion resistance, generates only a low level of noise and can be easily produced at low cost on a large scale.

Resin gears are superior to metal gears with respect to lightness in weight, self-lubricating properties, corrosion resistance, noise generation, processability, mass productivity and cost. Therefore, resin gears are widely used as component parts in such fields as automobiles, electronic and electric appliances and general machinery.

Since, however, resin gears are inferior to metal gears with respect to mechanical strength, thermal resistance, heat distortion and dimensional accuracy due to a shrinkage during processing, they have hitherto been unsatisfactory for the purpose of miniaturization or for achieving an increase in strength or a widening of the temperature range over which they are usable. Polyacetal resin, which is an injection-moldable thermoplastic resin, has hitherto been an important resin material for gears, since it has well-balanced properties and permits high productivity. Requirements have however recently arisen for resin gears to withstand higher temperatures and higher loads at which even polyacetal resins suffer one or more of softening, deformation and reduction in strength.

Because of the limited space available in many present-day automobiles, a windscreen-wiper drive gear or a power-window drive gear must often be directly connected to the associated drive motor. As a result, the gear is heated by the heat generated by the motor. In addition, the miniaturization of the gear is demanded. Under these circumstances, conventional resins become unusable because of an insufficient dedendum strength. Conventional resin gears have therefore been defective in this respect. Although there are many resins which have a high melting point and a high softening point and are not easily deformed even at a high temperature, resins not only having properties required of the gear but also satisfying economic requirements are not readily available at present.

Namely, it is now an important requirement to improve the mechanical properties, particularly the dedendum strength, of a resin gear at high temperatures without impairing the advantages thereof such as lightness in weight, self-lubricating properties, corrosion resistance, low noise, mass productivity and processability.

Although polyarylene sulphide resins such as a polyphenylene sulphide resin have a high thermal resistance and are usually suitable for a gear. the inventors found that ordinary polyarylene sulphides or compositions thereof had an insufficient dedendum strength at a high temperature. Thus a further improvement in the dedendum strength has been eagerly demanded.

The object of the present invention is to provide a gear usable at high temperatures, in particular having a high dedendum strength at high temperatures. The invention provides such a gear by using a polyarylene sulphide resin having a particular molecular weight and a substantially straight-chain molecular structure as the base resin in combination with an inorganic filler.

Thus the present invention provides a molded gear produced by molding a resin composition comprising:

(A) 100 parts by weight of a substantially straight chain polyarylene sulphide resin having a melt viscosity (at atemperature of 310 °C and a shear rate of 1200/sec) of 1000 to 5000 P, and

(B) 5 to 400 parts by weight of an inorganic filler.

The gear of the invention comprises a molded gear of the composition and a shaft connected with the gear part.

The inventors have found further that a molded gear produced by molding a resin composition comprising the above-described components (A) and (B) and in addition, (C) 0.01 to 5 parts by weight of at least one silane compound selected from the group consisting of aminoalkoxysilanes, epoxyalkoxysilanes, mercaptoalkoxysilanes and vinylalkoxysilanes has a further improved dedendum strength at high temperatures.

The base resin (A) of the composition for the gear of the present invention is a polyarylene sulphide resin (hereinafter regerred to as PAS) mainly comprising recurring units -(Ar-S)-, wherein Ar represents an arylene group.

The arylene groups are, for example, as follows:

p-phenylene group ( 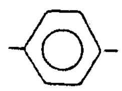 )

m-phenylene group ( 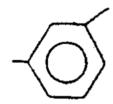 )

o-phenylene group ( 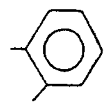 )

substituted phenylene groups ( 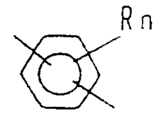 )

wherein R represents an alkyl group preferably having 1 to 6 carbon atoms or a phenyl group and n represents an integer of 1 to 4,

p,p'-diphenylene sulfone group

( 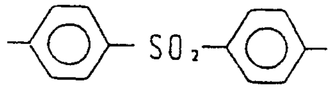 )

p,p'-biphenylene group ( 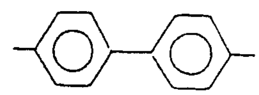 )

p,p'-diphenylene ether group

( 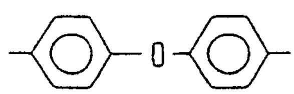 )

p,p'-diphenylenecarbonyl group

( 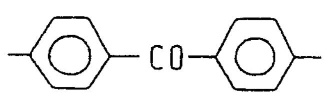 ) . and

naphthalene group ( 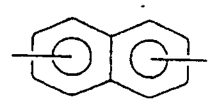 )

A homopolymer composed of only one kind of the recurring unit among the arylene sulphide groups containing the above-described arylene groups can be used and, in some cases, a copolymer composed of different kinds of the recurring units is preferred from the viewpoint of the processability of the composition.

Among the homopolymers, poly-p-phenylene sulphide (hereinafter referred to a PPS) in which the arylene group is a p-phenylene group is particularly preferred.

Copolymers having two or more kinds of arylene sulphide groups in which the arylene group is as described above are usable. Among them, a copolymer having a combination of a p-phenylene sulphide group with a m-phenylene sulphide group is particularly preferred. Among them, those containing at least 60 molar %, particularly at least 70 molar %, of p-phenylene sulphide groups are preferred from the view point of the properties such as thermal resistance, moldability and mechanical properties.

The amount of the m-phenylene sulphide group is preferably 5 to 40 molar %, particularly 10 to 25 molar %.

The polymers in which the recurring units are arranged not at random but in blocks (for example, those described in Japanese Patent Laid-Open No. 14228/1986) are preferred from the viewpoint of the thermal resistance and mechanical properties, though the processability is substantially the same.

Among the components (A) usable in the present invention, polymers having a substantially linear molecular structure produced by the polycondensation of monomers mainly comprising a bifunctional haloaromatic compound are preferred.

The polyarylene sulphides usually include, in addition to those having a linear structure, ones having a crosslinked structure formed by using a small amount of a crosslinkable monomer such as a polyhaloaromatic compound having three of more halogen substituents and ones formed by oxidative crosslinking or thermal crosslinking of the above-described polymers having a linear structure. Although crosslinked PPSs are rather well known and available on the market more easily than the straight-chain ones, such crosslinked PASs (PPS) are unsatisfactory for obtaining to a sufficient extent the effect intended in the present invention. Thus the PAS (PPS) to be used in the present invention is preferably one having substantially a straight-chain structure which does not form the crosslinked or branched structure as described above. However, it is to be noted that a branched or crosslinked polymer is also usable partially.

The PAS used as the component (A) in the present invention has a melt viscosity (at a temperature of 310 °C and a shear rate of 1200/sec) of 1000 to 5000 P. Particularly a PAS having a melt viscosity in the range of 1400 to 4000 P has excellent mechanical properties and is particularly preferred. The melt viscosity in this range is higher than that of an ordinary PPS and it suggests a high molecular weight. Thus the melt viscosity is another important constituent feature of the present invention in addition to the above-described molecular structure. When the melt viscosity is below this range, the dedendum strength is insufficient. When it exceeds 5000 P, the fluidity of the resin composition in the injection molding step is insufficient for the molding operation.

The PAS used as the component (A) of the present invention can be used in combination with a small amount of another auxiliary thermoplastic resin so far as it does not hinder the object of the invention.

The other thermoplastic resins usable herein may be any of those stable at a high temperature. They include aromatic polyesters of an aromatic dicarboxylic acid with a diol, such as polyethylene terephthalate and polybutylene terephthalate, or those of a hydroxy carboxylic acid; polyamides; polycarbonates; ABS; polyphenylene oxides; polyalkyl acrylates; polyacetals; polysulphones; polyether sulphones, polyether imides, polyether ketones and fluororesins. These thermoplastic resins can be used either alone or in the form of a mixture of two or more of them.

The inorganic filler used as the component (B) in the composition for forming the gear of the present invention is indispensable for keeping the rigidity in a high-temperature atmosphere and improving the dedendum strength. Fibrous, powdery, granular and platy fillers are usable.

Among them, fibrous fillers having a marked effect in improving the dedendum strength are preferred. They include fibers of inorganic substances such as glass, asbestos, carbon, silica, silica/alumina, zirconia, boron nitride, silicon nitride, boron and potassium titanate, and fibers of metals such as stainless steel, aluminium, titanium, copper and brass. Typical fibrous fillers are glass fibers and carbon fibers. Further fibers of high-melting organic substances such as polyamides, fluororesins and acrylic resins are also usable.

The powdery and granular fillers include carbon black; silicates such as silica, quartz powder, glass beads, glass powder, calcium silicate, aluminium silicate, kaolin, talc, clay diatomaceous earth and wollastonite; metal oxides such as iron oxide, titanium oxide, zinc oxide and alumina; metal carbonates such as calcium carbonate and magnesium carbonate; metal sulphates such as calcium sulphate and barium sulphate; silicon carbide; silicon nitride; boron nitride and various metal powders.

The platy fillers include mica, glass flakes and various metal foils.

The inorganic fillers may be used either alone or in the form of a mixture of two or more of them.

The fillers are desirably previously treated with a binder or a surface treatment in order to improve the dedendum strength. In the treatment, an epoxy, isocyanate, silane or titanate compound is used.

The inorganic filler is used in an amount of 5 to 400 parts by weight, preferably 10 to 200 parts by weight, for 100 parts by weight of the polyarylene sulphide resin. When it is less than 5 parts by weight, the rigidity and dedendum strength are insufficient, while when it is excessive, the molding operation becomes difficult.

The silane compound preferably used as the component (C) in combination with the components (A) and (B) includes aminoalkoxysilances, epoxyalkoxysilanes, mercaptoalkoxysilanes and vinylakoxysilanes. They may be used either alone or in the form of a mixture of two or more of them.

The aminoalkoxysilane is any of silane compounds having at least one amino group and two or three alkoxy groups in the molecule. They include γ-aminopropyltriethoxysilane, γ-aminopropyltrimethoxysilane, γ-aminopropylmethyldiethoxysilane, γ-aminopropylmethyldimethoxysilane, N-β(aminoethyl)-γ-aminopropyltriethoxysilane, N-β(aminoethyl)-γ-aminopropyltrimethoxysilane, N-β(aminoethyl) γ-aminopropylmethyldiethoxysilane, N-β(aminoethyl)-γ-aminopropylmethyldimethoxysilane and N-phenyl-γ-aminopropyltrimethoxysilane.

The epoxyalkoxysilane is any of silane compounds having at least one epoxy group and two or three alkoxy groups in the molecule. They include γ-glycidoxypropyltrimethoxysilane, β-(3,4-epoxycyclohexyl)ethyltrimethoxysilane and γ-glycidoxypropyltriethoxysilane.

The mercaptoalkoxysilane is any of silane compounds having at least one mercapto group and two or three alkoxy groups in the molecule. They include γ-mercaptopropyltrimethoxysilane and γ mercaptopropyltriethoxysilane.

The vinylalkoxysilane is any of silane compounds having at least one vinyl group and two or three alkoxy groups in the molecule. They include, for example, vinyltriethoxysilane, vinyltrimethoxysilane and vinyltris(β-methoxyethoxy)silane.

The amount of the alkoxysilane used in the present invention is 0.01 to 5 parts by weight, preferably 0.1 to 3 parts by weight, for 100 parts by weight of the polyarylene sulphide resin. When it is less than 0.01 part by weight, any intended dedendum strength improving effect cannot be obtained, while when it is in excess, the molding operation becomes difficult unfavorably.

The composition used as the gear material of the present invention may contain known substances usually incorporated into thermoplastic and thermosetting resins in order to obtain a composition having desired properties, such as stabilizers, e.g., antioxidants and ultraviolet absorbers; antistatic agents; releasing agents; flame retardants; colorants, e.g., dyes and pigments; lubricants; crystallization promoters and nucleating agents.

The polyarylene sulphide resin composition used as the starting material for the gear of the present invention can be produced by an ordinary process with an ordinary apparatus for production of a synthetic resin composition. Tln this process, the necessary components are kneaded and extruded with a single-screw or twin-screw extruder to form molding pellets. It is also possible to use a part of the necessary components as a master batch to be mixed with the rest to form a mixture to be melt-extruded.

The molded gear of the present invention can be produced by an ordinary process employed for molding thermoplastic resins. Usually the molded gear is produced from the pellets of the above-described resin composition by injection molding with an injection molding machine. The molding can be conducted by a process other than the injection molding, such as extrusion molding, press molding, punching or cutting. It is also possible to form a monolithic molding comprising a gear part combined with an ancillary part such as a shaft made of another material by outsert molding or insert molding in the injection molding process.

Typical examples of the gear of the present invention include a spur gear and a cylindrical gear. They also include those having an intermeshing pitch circle which is not on the same plane as the direction of the power transmission or those having a pitch helix which is not in parallel with the axis of the pitch cylinder, such as a helical gear, double helical gear, straight bevel gear, spiral bevel gear, zerol bevel gear, crossed helical gear, hypoid gear, worm gear and conditional worm gear.

These gears are usable as the part of electronic and electric appliances, automobiles and general machines, appliances, sundry goods, etc.

They are usable particularly as a driving means for units which are exposed to severe conditions, for example in the electronic and electric fields and also in the automobile field for driving windssreen wipers, power windows, passive belts, roof windows, rearview mirrors, radio antennae, seat adjusting and slide control units and retractable lamps.

The present invention has the following effects:

(1) The gear mechanism can be minimized since the dedendum strength thereof at a high temperature is higher than that of conventional resin gears. This provides a greater degree of freedom in designing the mechanism.

(2) Since it has a high dedendum strength, the gear is usable at a high temperature under a high load. For example, it can be used for a heavy duty windscreen wiper for vehicles such as trucks.

(3) The gear is usable under severe conditions including a high temperature, high humidity, etc., since it has a high humidity resistance and its dimensional change is only slight.

(4) The gear has characteristic features of resin gears, such as lightness in weight, easy processability, mass-productivity, corrosion resistance, frictional abrasion resistance and low noise

(5) The gear is less expensive than metallic gears.

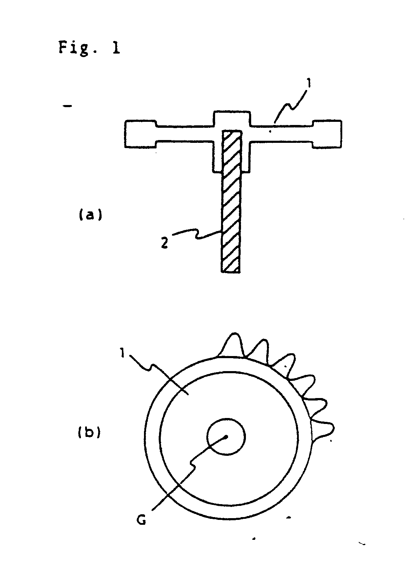

The accompanying drawings, designated Figures 1a and 1b, show a spur gear having a stainless steel shaft used in tests as described below. Figure 1a is a vertical cross-sectional view and Figure 1b is a plan view.

The reference numerals in the drawings indicate the following items:

1: resin spur gear,

2: stainless steel shaft, and

3: gate.

## Examples

The following non-limiting Examples further illustrate the present invention.

### Examples 1 to 12.

A silane compound as the component (C) was added, if necessary, in an amount specified in Table 1 to a polyphenylene sulphide resin as the component (A) and they were mixed by means of a Henschel mixer for two minutes.

Then an inorganic filler as the component (B) was added thereto in an amount specified in Table 1 and they were mixed by means of a blender for 30 sec. The mixture was kneaded with an extruder at a cylinder temperature of 310 °C to form pellets of the polyphenylene sulphide resin composition. The pellets were shaped into ASTM test pieces with an injection molding machine at a cylinder temperature of 320 °C and a mold temperature of 150 °C. The tensile strength, tensile elongation, Young's modulus in flexure and heat distortion temperature of them were determined.

Further a spur gear having a stainless steel shaft inserted thereinto was produced by injection molding with an injection molding machine and a gear mold at a cylinder temperature of 320 °C and a mold temperature of 150 °C. The spur gear had a shape as shown in Figure 1 and a pitch circle diameter and module of 57.8 mm and 1.1 mm, respectively. The spur gear thus obtained was left to stand at 23 °C and 50% humidity for 24 h and then the dedendum strength thereof was determined at 23 °C and 80 °C. In the dedendum strength test, the spur gear produced as described above was mated with a worm gear and forcedly rotated and the strengththereof at rupture was determined with a torsional tester (manufactured by Shimadzu Corporation).

The melt viscosity of the resin was determined with Capirograph IB (manufactured by Toyo Seiki Seisaku-sho, Ltd.). The capillary used had a diameter of 1mm and a length of 10 mm. The barrel temperature was 130 °C and the shear rate ranges from 120/sec to 12000/sec. The value obtained at 1200/sec was taken as the melt viscosity. The results are shown in Table 1.

The results for tensile strength and Young's modulus of the tested resins are presented in Table 1 in $kgf/cm^2$ units. 1 $kgf/cm^2$ is equivalent to 98.07 kPa. The load of 18.6 $kg/cm^2$ for the test of temperature of heat distortion is equivalent to 1.824 MPa.

### Comparative Examples 1 to 5

The same procedure as that described above was repeated except that PPS compositions outside the scope of the present invention, such as one containing no component (B), one comprising a PPS having a viscosity 1000 P or below or one comprising a polymer having a substantially nonlinear molecular structure, were used. The results are shown in Table 1.

### Comparative Examples 6 and 7

The injection molding was conducted in the same manner as that of Examples 1 to 12 except that the

PPS was replaced with a polyacetal resin (POM) and its composition was used and that the injection molding conditions comprised a temperature of the cylinder of the injection molding machine of 200 °C and a mold temperature of 80 °C. The results of the determination of the properties are shown in Table 1.

Table 1

| | | Composition | | | | | | General properties | | | | Evaluation of molded gear | |
|---|---|---|---|---|---|---|---|---|---|---|---|---|---|
| | | component A: polyphenylene sulfide resin | | component B: filler | | component C: silane compound | | tensile strength | tensile elongation | Young's modulus in flexure | heat distortion temperature 18.6 kg/cm² | dedendum strength | |
| | | [Melt viscosity] | [Pts. wt.] | [Kind] | [Pts. wt.] | [Kind] | [Pts. wt.] | [kgf/cm²] | [%] | [kgf/cm²] | [°C] | 23°C [kgcm] | 80°C [kgcm] |
| Ex. | 1 | 2010 p *1) | 100 | glass fiber | 70 | - | - | 1700 | 1.7 | 130000 | 265 | 1063 | 930 |
| | 2 | 1420 p *1) | 100 | " | 70 | - | - | 1750 | 1.6 | 132000 | 265 | 1041 | 910 |
| | 3 | 1050 p *1) | 100 | " | 70 | - | - | 1800 | 1.6 | 133000 | 265 | 1002 | 889 |
| | 4 | 2010 p *1) | 100 | " | 50 | - | - | 1700 | 2.1 | 110000 | 260 | 1060 | 878 |
| | 5 | 2010 p *1) | 100 | " | 10 | - | - | 1450 | 3.2 | 81000 | 255 | 939 | 715 |
| | 6 | 2010 p *1) | 100 | glass bead | 50 | - | - | 850 | 3.0 | 100000 | 260 | 1014 | 851 |
| | 7 | 2010 p *1) | 100 | potassium titanate fiber | 50 | - | - | 1420 | 2.0 | 122000 | 260 | 887 | 740 |
| | 8 | 2010 p *1) | 100 | carbon fiber | 50 | - | - | 2050 | 1.0 | 190000 | 265 | 1082 | 988 |
| | 9 | 2010 p *1) | 100 | glass fiber | 70 | aminosilane *3) | 0.85 | 1920 | 2.0 | 131000 | 265 | 1145 | 968 |
| | 10 | 2010 p *1) | 100 | " | 70 | epoxysilane *4) | 0.85 | 1870 | 2.0 | 131000 | 265 | 1127 | 962 |
| | 11 | 2010 p *1) | 100 | glass fiber | 70 | mercaptosilane *5) | 0.85 | 1850 | 1.9 | 130000 | 265 | 1119 | 950 |
| | 12 | 2010 p *1) | 100 | " | 70 | vinylsilane *6) | 0.85 | 1810 | 1.9 | 130000 | 265 | 1105 | 943 |
| Co. Ex. | 1 | 2010 p *1) | 100 | - | - | - | - | 870 | 17.2 | 38600 | 108 | 816 | 596 |
| | 2 | 730 p *1) | 100 | glass fiber | 70 | - | - | 1850 | 1.4 | 135000 | 265 | 794 | 663 |
| | 3 | 730 p *1) | 100 | " | 70 | aminosilane *3) | 0.85 | 1980 | 1.6 | 137000 | 265 | 860 | 695 |
| | 4 | 1100 p *2) | 100 | " | 70 | - | - | 1500 | 1.2 | 135000 | 265 | 540 | 410 |
| | 5 | 1100 p *2) | 100 | " | 70 | aminosilane *3) | 0.85 | 1660 | 1.4 | 136000 | 266 | 610 | 455 |
| | 6 | POM copolymer | 100 | - | - | - | - | 620 | 75.0 | 26400 | 110 | 882 | 627 |
| | 7 | POM copolymer | 100 | glass fiber | 30 | - | - | 1300 | 3.0 | 77000 | 163 | 969 | 708 |

*1) Straight-chain PPS
*2) Crosslinked PPS
*3) γ-Aminopropyltriethoxysilane
*4) γ-Glycidoxypropyltrimethoxysilane
*5) γ-Mercaptopropyltrimethoxysilane
*6) Vinyltrimethoxysilane

## Claims

1. A molded gear produced by molding a resin composition comprising:
(A) 100 parts by weight of a substantially straight chain polyarylene sulphide resin having a melt viscosity (at a temperature of 310 °C and a shear rate of 1200/sec) of 1000 to 5000 P, and
(B) 5 to 400 parts by weight of an inorganic filler.

2. A molded gear as claimed in claim 1, in which the polyarylene sulphide (A) is a homopolymer comprising poly-p-phenylene sulphide.

3. A molded gear as claimed in claim 1, in which the polyarylene sulphide (A) is a copolymer having a combination of a p-phenylene sulphide group with a m-phenylene sulphide group.

4. A molded gear as claimed in claim 3, in which the copolymer contains at least 60 molar % of p-phenylene sulphide groups.

5. A molded gear as claimed in claim 3 or claim 4, in which the copolymer contains 5 to 40 molar % of m-phenylene sulphide groups.

6. A molded gear as claimed in any preceding claim, in which the polyarylene sulphide (A) has a substantially linear molecular structure produced by the polycondensation of monomers mainly comprising a bifunctional haloaromatic compound.

7. A molded gear as claimed in any preceding claim, in which the polyarylene sulphide (A) has a melt viscosity (at a temperature of 310 °C and a shear rate of 1200/sec) of 1400 to 4000 P.

8. A molded gear as claimed in any preceding claim, in which the amount of the inorganic filler is 10 to 200 parts by weight for 100 parts by weight of the polyarylene sulphide resin (A).

9. A molded gear as claimed in any preceding claim, and further comprising (C) 0.01 to 5 parts by weight of at least one silane compound selected from the group consisting of aminoalkoxysilanes, epoxyalkoxysilanes, mercaptoalkoxysilanes and vinylalkoxysilanes.

10. A molded gear as claimed in claim 9, in which the amount of the silane compound (C) is 0.1 to 3 parts by weight for 100 parts by weight of the polyarylene sulphide resin (A).

Fig. 1

(a)

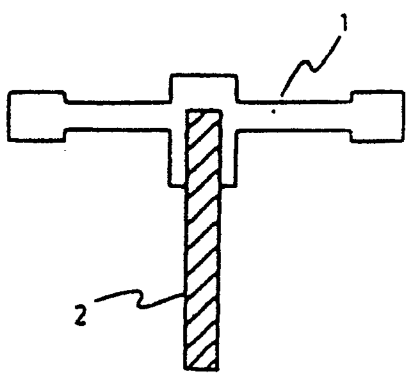


(b)